Europäisches Patentamt

European Patent Office

Office européen des brevets

(11) Publication number: **0 174 530**
**B1**

# EUROPEAN PATENT SPECIFICATION

(45) Date of publication of patent specification: **11.04.90**

(51) Int. Cl.⁵: **F 04 C 29/08**

(21) Application number: **85110520.5**

(22) Date of filing: **21.08.85**

(54) Refrigerant compressor discharge valve.

(30) Priority: **06.09.84 JP 186901/84**

(43) Date of publication of application:
**19.03.86 Bulletin 86/12**

(45) Publication of the grant of the patent:
**11.04.90 Bulletin 90/15**

(84) Designated Contracting States:
**DE FR GB IT SE**

(56) References cited:
**AT-B- 350 701**
**DE-A-2 309 228**
**FR-A- 997 033**
**FR-A-1 492 539**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Ishijima, Koji**
**Mitsubishi Denki K.K. Shizuoka Works 18-1, Ojika**
**3-chome Shizuoka-shi Shizuoka (JP)**
Inventor: **Sano, Fumiaki**
**Mitsubishi Denki K.K. Shizuoka Works 18-1, Ojika**
**3-chome Shizuoka-shi Shizuoka (JP)**
Inventor: **Wada, Fumio**
**Mitsubishi Denki K.K. Shizuoka Works 18-1, Ojika**
**3-chome Shizuoka-shi Shizuoka (JP)**
Inventor: **Asami, Kazutomo**
**Mitsubishi Denki K.K. Shizuoka Works 18-1, Ojika**
**3-chome Shizuoka-shi Shizuoka (JP)**

(74) Representative: **Eitle, Werner, Dipl.-Ing. et al**
**Hoffmann, Eitle & Partner Patentanwälte**
**Arabellastrasse 4**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a discharge valve arrangement suitable for a refrigerant compressor having a compression chamber bounded by a wall plate having a discharge port, said arrangement comprising: a resiliently flexible valve plate having a displaceable end portion for opening and closing said port; spring means arranged to engage said valve plate at an intermediate portion thereof to bias said valve plate against said wall plate in such manner that said end portion is displaceable for opening said port substantially free of bias from said spring means; a valve holder superposed over said valve plate; and means for clamping overlying ends of said valve holder, said spring means and said valve plate remote from said port to said wall plate.

Such a discharge valve arrangement for a refrigerant compressor is known from DE—A—2 309 228. During operation, the free end of the valve plate moves up and down in rapid alteration so that the valve plate is considerably strained at its clamped end. However, the spring means engaging the valve plate acts as a support and thereby prevents the overloading of the valve plate by strengthening this. Furthermore, the spring means, in the form of a leaf spring, also dampens uncontrollable vibrations of the valve plate by means of friction between the contacting surfaces of the valve plate and the spring means, and thus reduces the bounce, due to chatter, of the valve plate on the port during the rapid opening and closing motion of the plate.

The friction generated between the contact surfaces gives rise to frictional damping forces which act to dampen the vibrations and sudden striking against the port of the valve plate. However, these frictional damping forces give rise to noise caused by the friction generated when the contact surfaces of the valve plate and the leaf spring rub against each other during operation of the arrangement when the valve plate and leaf spring flex.

In a second known rotary compressor for a refrigerator, as shown in Japanese Utility Model Publication No. 57-A-174773, a valve plate for opening and closing a discharge port between a compression chamber and a housing space is biased by a leaf spring to a closed position. Contact between the valve plate and the leaf spring gives rise to frictional damping.

In the known constructions, the leaf spring applies bias force to the free end of the valve plate with the consequence that opening of the discharge port is delayed owing to the resistance of the spring. As a result, pressure in the cylinder builds up to a higher level than internal housing pressure (so-called overshoot) which increases the power required for driving and lowers efficiency.

Furthermore, the frictional damping forces between contacting surfaces of the leaf spring and valve plate give rise to noisy operation due to friction.

An object of this invention is to provide a refrigerant discharge valve which increases the efficiency of the compressor.

Another object of the invention is to provide a refrigerant discharge valve which reduces operational noise.

A further object of the invention is to provide a refrigerant discharge valve which produces substantially no overshoot.

A yet further object of the invention is to provide a refrigerant discharge valve which minimizes power requirements.

According to the invention, the valve arrangement defined in the first paragraph of the specification is characterized in that said valve holder is elongate and configured to define a space above said port in which said valve plate may undergo flexural opening and closing movements, and in that a downwardly offset portion is defined in an intermediate position along the length of said spring means to engage said intermediate portion of said valve plate.

For a better understanding of the invention, and to show how the same may be carried into effect, reference will now be made, by way of example, to the accompanying drawings, in which

Figure 1 is an axial cross-sectional view of a refrigerant compressor incorporating a discharge valve;

Figure 2 is a cross-sectional view taken along line II—II of Figure 1;

Figure 3 is an enlarged cross-sectional view of a known valve arrangement taken along line III—III of Figure 2;

Figure 4 is an exploded cross-sectional view of the refrigerant discharge valve of Figure 3;

Figure 5 is an enlarged cross-sectional view similar to Figure 3 of a refrigerant compressor discharge valve according to one embodiment of the present invention;

Figure 6 is an exploded cross-sectional view of the discharge valve illustrated in Figure 5;

Figures 7(A), 7(B) and 7(C) are diagrams showing the comparative degrees of flexing of a discharge valve plate according to one embodiment of the invention and according to the prior art; and

Figures 8 and 9 are perspective views of leaf spring configurations for use in further embodiments of the invention.

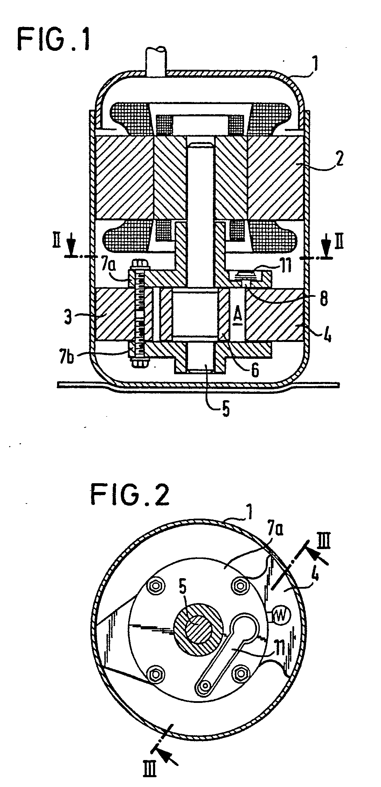

Figures 1 and 2 illustrate a rotary compressor for a refrigerator, e.g. as disclosed in Japanese Laid-Open Utility Model Publication No. 57-174773, wherein a closed housing 1 contains a motor 2 and a compressor unit 3 comprising a cylinder 4, a crankshaft 5, a rolling piston 6, a radially slidable vane (not shown), and bearing end plates 7a, 7b closing the opposite ends of the cylinder to define a compression chamber A and support the crankshaft. The end plate 7a has a port 8 defined therein for discharging the refrigerant from the compression chamber A into the space within the housing. A valve plate 9 mounted on the end plate 7a has a free end 9a for opening and closing the discharge port 8. A leaf spring is superposed on and fixed to the valve plate for biasing the valve plate 9 to a closed position.

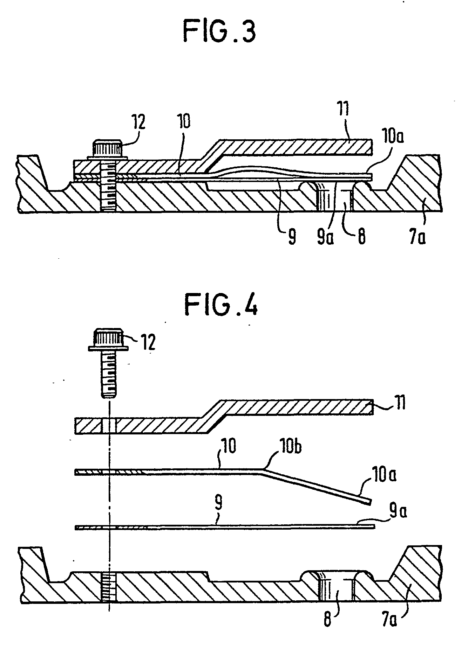

A known leaf spring 10 is shown in Figures 3 and 4 and has a free end 10a for biasing the free end 9a of the valve plate into a closed position. A valve holder 11 is fastened by a bolt 12 to fix the opposite ends of the valve plate 9 and the leaf spring 10 to the bearing end plate 7a as shown in Figure 3. The leaf spring has an intermediate bend at 10b for establishing its biasing force.

In operation, when the motor 2 is energized the crankshaft 5 is driven thereby to rotate the exentrically mounted piston 6 and compress the refrigerant gas in the cylinder 4 as the volume of the chamber A varies. When the internal pressure in the compression chamber exceeds the sum of the pressure in the closed housing 1 and the biasing force of the leaf spring 10, the free ends of the valve plate 9 and the leaf spring flex upwardly to open the discharge port 8 and allow the compressed refrigerant gas to discharge into the housing.

By varying the thickness and/or shape of the leaf spring 10 with respect to the valve plate 9, the natural frequencies of the leaf spring and the valve plate are varied to reduce noises due to frictional damping forces generated between their contacting surfaces.

With the construction of the conventional refrigerant discharge valve, the timing of the opening of the refrigerant discharge port is delayed by an interval corresponding to the resistance imposed by the leaf spring. The pressure in the cylinder 4 thus builds up to a higher level than the internal pressure in the housing, resulting in a so-called "overshoot" which requires an extra amount of drive power and lowers the efficiency of the compressor.

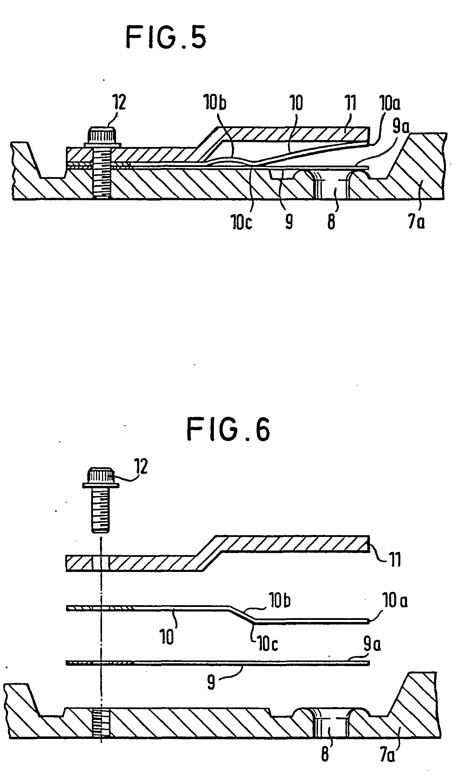

Figures 5 and 6 illustrate a refrigerant discharge valve according to a first embodiment of the invention. A bearing end plate 7a has a refrigerant discharge port 8.

A valve plate 9 mounted on the end plate 7a has a free end 9a for opening and closing the discharge port. A leaf spring 10 is superposed on the valve plate 9. A valve holder 11 is fastened by a bolt 12 to fix the opposite ends of the valve plate and the leaf spring to the end plate 7a as shown in Figure 5. The leaf spring has a free end 10a, and a downwardly bent portion at an intermediate position 10b between the fixed and free ends thereof. The bent portion has a press point 10c which bears on an intermediate zone of the valve plate 9 to bias it downwardly against the end plate 7a. When assembled as shown in Figure 5, the free end 10a of the leaf spring is held against the lower surface of the valve holder 11. Thus, no spring force is applied to the free end 9a of the valve plate, at least during the initial opening of the refrigerant discharge port 8.

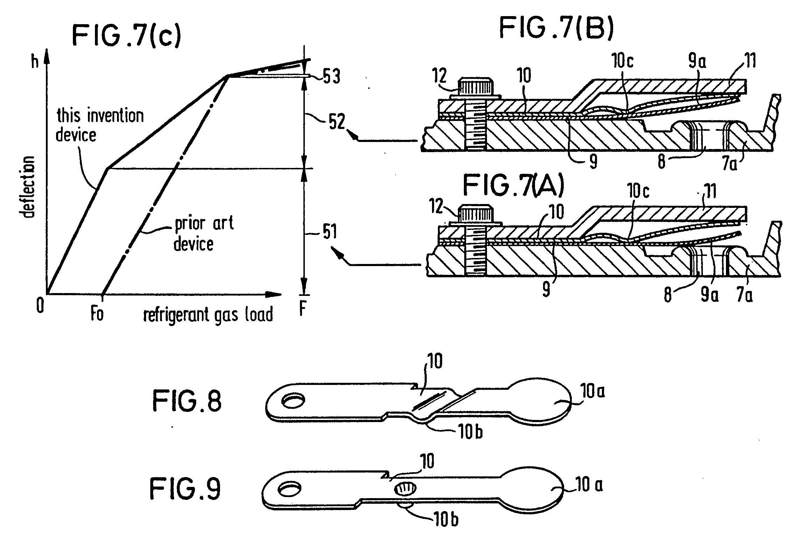

As soon as the pressure in the compression chamber A reaches the internal pressure in the housing 1, that is, when the compressed refrigerant gas load F on the plate equals zero, the valve plate 9 starts to flex as shown in Figure 7(A). In this first phase the free end of the valve plate flexes without any biasing force from the leaf spring 10. Thereafter, in a second phase, with the parts in the condition as shown in Figure 7(B), the biasing force from the spring acts on the valve plate 9, which then flexes at a reduced rate as the refrigerant gas load increases. More specifically, the force from the leaf spring 10 acts on the valve plate 9 through the bent portion of the spring. During the initial flexing of the valve plate no spring force is applied to its free end 9a.

The first and second phases of valve plate movement are represented in the force deflection diagram of Figure 7(C) and contrasted with the prior art. The first and second phases correspond to curve segments 51 and 52 respectively, whilst segment 53 shows the end phase in which both leaf spring 10 and valve plate 9 are strongly flexed upwardly against valve holder 11.

Thus with this arrangement of Figures 5 and 6 the flexing of the valve plate 9 at the time of discharging the compressed refrigerant varies through three regions 51 through 53 as indicated by the solid line in Figure 7(C), dependent on the load from the compressed refrigerant gas.

With a conventional discharge valve, the valve plate is always biased by the leaf spring and does not begin to flex until the compressed refrigerant gas load F=Fo, as indicated by the chain line in Figure 7(C). The discharge valve of Figures 5 and 6 is not so constantly biased and thus opens at an earlier time, thereby reducing or substantially eliminating the opening pressure overshoot and reducing the compressor drive power. Since no leaf spring force acts on the free end of the valve plate during its initial flexing, the flow speed of the refrigerant through the discharge port is lowered, and hence any noise resulting from refrigerant flow through the port is also reduced.

In as much as the leaf spring 10 is held at its free end 10a against the valve holder 11 and at its press point 10c against the valve plate 9, the area of friction between the contact surfaces of the valve plate 9 and the leaf spring 10 is reduced, so that the noise generated by the frictional damping forces between these contact surfaces is substantially reduced at the contact points, whilst the desired frictional damping effect is nevertheless retained. Furthermore, the generation of noise by dirt particles located between the contact surfaces is virtually eliminated, as the single press point 10c allows for these dirt particles to be pushed out from between the contact surfaces, whereas this is not possible according the known flat valve plate and leaf spring arrangement, wherein the dirt particles lodged therebetween do not escape and thus give rise to noise.

While in the foregoing embodiment the deformed portion of the spring 10 comprises a vertically bent intermediate step, it may also comprise a U-shaped groove as shown in Figure 8 or a circular projection as shown in Figure 9. Moreover, the portion of the leaf spring extending from the press point 10c to the free end 10a may be simply omitted or eliminated, depending upon the flexural characteristics of the particular spring employed.

Thus, there is provided a refrigerant discharge valve including a leaf spring for biasing a valve plate, the leaf spring having a deformed portion for establishing a biasing force, but wherein the spring engages the valve plate at an intermediate zone thereof, and the free end of the valve plate is not subjected to any spring pressure during the initial opening of the refrigerant discharge port. This arrangement reduces any delay in the timing of the opening of the discharge port by the free end of the valve plate.

**Claims**

1. A discharge valve arrangement suitable for a refrigerant compressor having a compression chamber (A) bounded by a wall plate (7a) having a discharge port (8), said arrangement comprising: a resiliently flexible valve plate (9) having a displaceable end portion (9a) for opening and closing said port (8); spring means (10) arranged to engage said valve plate (9) at an intermediate portion thereof to bias said valve plate (9) against said wall plate (7a) in such manner that said end portion (9a) is displaceable for opening said port (8) substantially free of bias from said spring means (10); a valve holder (11) superposed over said valve plate (9); and means for clamping overlying ends of said valve holder (11), said spring means (10) and said valve plate (9) remote from said port (8) to said wall plate (9), characterized in that said valve holder is elongate and configured to define a space above said port (8) in which said valve plate (9) may undergo flexural opening and closing movements, and in that a downwardly offset portion (10b) is defined in an intermediate position along the length of said spring means (10) to engage said intermediate portion of said valve plate (9).

2. An arrangement according to claim 1 wherein said spring means (10) comprises a leaf spring (10).

3. An arrangement according to claim 1 or 2 wherein said deformed portion comprises a bent stepped portion, a U-shaped groove or a circular projection.

4. An arrangement according to claim 1, 2 or 3 wherein said spring means has a first end clamped by said valve holder (11) and a second end bearing against said valve holder (11).

**Patentansprüche**

1. Auslaßventilanordnung, die für einen Kältemittelverdichter geeignet ist, die eine Kompressionskammer (A), die von einer Wandplatte (7a) mit einer Auslaßöffnung (8) begrenzt ist, aufweist, wobei die Anordnung aufweist:
eine elastisch flexible Ventilplatte (9) mit einem verschiebbaren Endabschnitt (9a) zum Öffnen und Schließen der Öffnung (8);
einer Federeinrichtung (10), die sich an die Ventilplatte (9) an einem Zwischenabschnitt derselben anlegt, um die Ventilplatte (9) gegen die Wandplatte (7a) derart vorzuspannen, daß der Endabschnitt (9a) zum Öffnen der Öffnung (8) im wesentlichen frei von Vorspannung von der Federeinrichtung (10) verschiebbar ist;
einen Ventilhalter (11), der über der Ventilplatte (9) angeordnet ist; und
eine Einrichtung zum Klemmen übereinanderliegender Enden des Ventilhalters (11), der Federeinrichtung (10) und von der Öffnung (8) entfernter Enden der Ventilplatte (9) an der Wandplatte (7a), dadurch gekennzeichnet, daß der Ventilhalter langgestreckt und so ausgebildet ist, daß er einen Raum oberhalb der Öffnung (8) bildet, in welchem die Ventilplatte (9) Biegeöffnungs- und Schließbewegungen ausführen kann, und daß ein nach unten versetzter Teil (10b) in einer Zwischenstellung entlang des Länge der Federeinrichtung (10) bestimmt ist, um sich an den Zwischenabschnitt der Ventilplatte (9) anzulegen.

2. Anordnung nach Anspruch 1, wobei die Federeinrichtung (10) eine Blattfeder (10) aufweist.

3. Anordnung nach Anspruch 1 oder 2, wobei der deformierte Teil einen gebogenen gestuften Teil, eine U-förmige Nut oder einen kreisförmigen Vorsprung aufweist.

4. Anordnung nach Anspruch 1, 2 oder 3, wobei die Federeinrichtung ein erstes Ende aufweist, das durch den Federhalter (11) geklemmt ist, und ein zweites Ende aufweist, das sich in den Federhalter (11) anlegt.

**Revendications**

1. Agencement de soupape de refoulement convenant pour un compresseur de réfrigérant ayant une chambre de compression (A) délimitée par une plaque formant paroi (7a) comportant un orifice de refoulement (8), l'agencement comprenant: une plaque formant clapet flexible élastiquement (9) ayant une partie d'extrémité déplaçable (9a) pour ouvrir et fermer l'orifice (8); un moyen de ressort (10) disposé de manière à venir en contact avec la plaque formant clapet (9) à une partie intermédiaire de celle-ci afin de solliciter la plaque formant clapet (9) contre la plaque formant paroi (7a) de façon que la partie d'extrémité (9a) puisse être déplacée pour ouvrir l'orifice (8) sensiblement exempte de sollicitation de la part du moyen de ressort (10); un support (11) de soupape superposé à la plaque formant clapet (9); et un moyen pour fixer les extrémités se chevauchant du support (11) de soupape, le moyen de ressort (10) et la plaque formant clapet (9) à distance entre l'orifice (8) et la plaque formant paroi (9), caractérisé en ce que le support de soupape est allongé et a une forme définissant un espace au-dessus de l'orifice (8) dans lequel la plaque formant clapet (9) peut subir des mouvements d'ouverture et de fermeture par flexion, et en ce qu'une partie décalée vers le bas (10b) est définie dans une position intermédiaire de la longueur du moyen de ressort (10) pour venir en contact avec la partie intermédiaire de la plaque formant clapet (9).

2. Agencement selon la revendication 1, dans lequel le moyen de ressort (10) est un ressort à lame (10).

3. Agencement selon la revendication 1 ou la revendication 2, dans lequel la partie déformée comporte une partie à gradin cambrée, une rainure en forme de U ou une saillie circulaire.

4. Agencement selon la revendication 1, 2 ou 3, dans lequel le moyen de ressort comporte une première extrémité assujettie par le support (11) de soupape et une seconde extrémité appuyant contre le support (11) de soupape.

# FIG.1

# FIG.2

1

FIG.3

FIG.4

## FIG.5

## FIG.6

## FIG.7(c)

h

deflection

this invention device

prior art device

0    Fo    refrigerant gas load    F

53

52

51

## FIG.7(B)

12    10    10c    9a    11

9    8    7a

## FIG.7(A)

12    10    10c    11

9    8    9a    7a

## FIG.8

10    10a    10b

## FIG.9

10    10a    10b